# EUROPEAN PATENT APPLICATION

(11) **EP 2 760 029 A1**
(43) Date of publication of application: **30.07.2014**
(21) Application number: 14152366.2
(22) Date of filing: 24.01.2014
(51) Int. Cl.: H01B 3/12

(54) **Dielectric thin film-forming composition and method of forming dielectric thin film using the same**

(30) Priority: 28.01.2013 JP 2013013112
(71) Applicant: Mitsubishi Materials Corporation, Chiyoda-ku Tokyo 100-8117 (JP)
(72) Inventor: Fujii, Jun, Naka-shi, Ibaraki (JP); Watanabe, Toshiaki, Sanda-shi, Hyogo (JP); Sakurai, Hideaki, Naka-shi, Ibaraki (JP); Soyama, Nobuyuki, Naka-shi, Ibaraki (JP)
(74) Representative: Gille Hrabal

(57) **Abstract**

In a thin film capacitor or the like, a dielectric thin film-forming composition capable of improving leakage current characteristics; and a method of forming a dielectric thin film using this composition are provided.

regarding a dielectric thin film-forming composition for forming a dielectric thin film, the dielectric thin film is formed of a barium strontium titanate (BST)-based complex perovskite film, and the composition is doped with aluminum (Al). In addition, a doping amount of the aluminum (Al) is in a range of 0.1 at% to 15 at% with respect to 100 at% of perovskite A site atoms contained in the composition.

## Description

### BACKGROUND OF THE INVENTION

### Field of the Invention

The present invention relates to a dielectric thin film-forming composition capable of forming, for example, a thin film capacitor having superior leakage current characteristics; and a method of forming a dielectric thin film using this composition.

### Description of Related Art

In a high-frequency tunable device such as a high-frequency filter, a high-frequency antenna, or a phase shifter, for example, a thin film capacitor including an upper electrode, a lower electrode, and a dielectric layer formed between both the electrodes is incorporated as a variable capacitance element (tunable element). "Tunable" described herein refers to a capacitance being variable when an applied voltage is changed. A thin film capacitor functions as a capacitor that changes a capacitance according to a change of a voltage applied between both electrodes. In a dielectric layer constituting such a thin film capacitor, a dielectric thin film which is formed using a perovskite type oxide having high permittivity such as strontium titanate (ST: SrTiO₃), barium strontium titanate (BST), or a barium titanate (BT: BaTiO₃) is used. As a method of forming a dielectric thin film, a chemical solution deposition method such as a sol-gel method is used (for example, refer to Japanese Unexamined Patent Application, First Publication No. S60-236404 (line 10 on upper right column to line 3 on lower left column, page 6)), in addition to a physical vapor deposition method such as a vacuum deposition method, a sputtering method, or a laser ablation method; and a chemical vapor deposition (CVD) method. Similarly to the method of forming a ferroelectric thin film disclosed in Japanese Unexamined Patent Application, First Publication No. S60-236404 (line 10 on upper right column to line 3 on lower left column, page 6), not only a method of forming a ferroelectric thin film with a sol-gel method using a mixed solution containing either or both an alkoxide of a component metal and an organic acid salt; but also the kind of a metal compound which can be used in the method and heating and baking conditions thereof are well-known to a person skilled in the art.

Meanwhile, Japanese Unexamined Patent Application, First Publication No. 2007-5804 (Claim 1, paragraph [0021]) discloses a technique of improving electrical characteristics by adding a dopant to barium titanate. Specifically, a dielectric thin film composition disclosed in Japanese Unexamined Patent Application, First Publication No. 2007-5804 (Claim 1, paragraph [0021]) contains one or two or more additives containing barium and titanium dissolved in an organic medium, the one or two or more additives being selected from the group consisting of barium titanate, any composition that can form barium titanate during pre-baking, and mixtures thereof. This dielectric thin film composition is doped with 0.002 at% to 0.05 at% of a dopant containing an element selected from the group consisting of Sc, Cr, Fe, Co, Ni, Ca, Zn, Al, Ga, Y, Nd, Sm, Eu, Gd, Dy, Ho, Er, Yb, Lu, and mixtures thereof. Acceptor doping on the titanium site (B site) of the above-described barium titanate-based dielectrics is used to form high-permittivity dielectric films or dielectric layers. In particular, the above-described dopants and mixtures of these dopants and metals can occupy the B site of the (ABO₃) perovskite structure, and acceptor dopants trap conduction electrons so that a decrease in insulation resistance and increase in dielectric losses are suppressed.

### SUMMARY OF THE INVENTION

However, in the dielectric thin film composition disclosed in Japanese Unexamined Patent Application, First Publication No. 2007-5804 (Claim 1, paragraph [0021]) of the related art, leakage resistance can be obtained to a certain degree by controlling film forming conditions; however, there is a problem in that sufficient leakage resistance cannot be obtained in practice.

Therefore, the present inventors have focused on a material used for forming a dielectric thin film and, from the viewpoint of improving this material, completed the present invention capable of improving leakage current characteristics which are basic characteristics of a thin film capacitor or the like.

An object of the invention is to provide, in a thin film capacitor or the like, a dielectric thin film-forming composition capable of improving leakage current characteristics; and a method of forming a dielectric thin film using this composition.

According to a first aspect of the present invention, there is provided a dielectric thin film-forming composition for forming a dielectric thin film, in which the dielectric thin film is formed of a barium strontium titanate (BST)-based complex perovskite film, the composition is doped with aluminum (Al), and a doping amount of the aluminum (Al) is in a range of 0.1 at% to 15 at% with respect to 100 at% of perovskite A site atoms contained in the composition.

According to a second aspect of the present invention, in the dielectric thin film-forming composition according to the first aspect, the barium strontium titanate (BST)-based complex perovskite film is represented by a formula Ba₁₋ₓSrₓTi_{y}O₃ (where 0.2<x<0.6 and 0.9<y<1.1).

According to a third aspect of the present invention, in the dielectric thin film-forming composition according to the first aspect, raw materials for forming the barium strontium titanate (BST)-based complex perovskite film contain a compound in which an organic group binds to a metal element through an oxygen or nitrogen atom of the organic group.

According to a fourth aspect of the present invention, in the dielectric thin film-forming composition according to the third aspect, the raw materials for forming the barium strontium titanate (BST)-based complex perovskite film contain one or two or more elements selected from the group consisting of metal alkoxides, metal diol complexes, metal triol complexes, metal carboxylates, metal β-diketonate complexes, metal β-diketoester complexes, metal β-iminoketo complexes, and metal amino complexes.

According to a fifth aspect of the present invention, in the dielectric thin film-forming composition according to the first aspect, the raw materials for forming the barium strontium titanate (BST)-based complex perovskite film contain a compound in which an organic group binds to aluminum (Al) through an oxygen or nitrogen atom of the organic group.

According to a sixth aspect of the present invention, in the dielectric thin film-forming composition according to the fifth aspect, the raw materials for forming the barium strontium titanate (BST)-based complex perovskite film contain one or two or more elements selected from the group consisting of carboxylate compounds, nitrate compounds, alkoxide compounds, diol compounds, triol compounds, β-diketonate compounds, β-diketoester compounds, β-iminoketo compounds, and amino compounds.

According to a seventh aspect of the present invention, the dielectric thin film-forming composition according to any one of the first to sixth aspects further contains 0.2 mol to 3 mol of one or two or more stabilizers selected from the group consisting of β-diketones, β-ketonic acids, β-keto esters, oxyacids, diols, triols, higher carboxylic acids, alkanolamines, and polyvalent amines with respect to 1 mol of a total amount of metals in the composition.

According to an eighth aspect of the present invention, in the dielectric thin film-forming composition according to the first aspect, the doping amount of the aluminum (Al) is 0.2 at% to 10 at% with respect to 100 at% of perovskite A site atoms contained in the composition.

According to ninth aspect of the present invention, there is provided a method of forming a dielectric thin film, in which the dielectric thin film-forming composition according to any one of the first to eighth aspects is used.

According to a tenth aspect of the present invention, there is provided a method of forming a dielectric thin film including: repeating coating the dielectric thin film-forming composition according to any one of the first to eighth aspects on a heat-resistant substrate and drying the composition until a film having a desired thickness is obtained; and baking the film at a crystallization temperature or higher in the air, in an oxidation atmosphere, or in a water vapor-containing atmosphere.

According to an eleventh aspect of the present invention, there is provided a method of manufacturing a complex electronic component, in which the complex electronic component includes a dielectric thin film which is formed using the method according to the ninth or tenth aspect, and the complex electronic component is a thin film capacitor, a capacitor, an IPD, a DRAM memory capacitor, a laminated capacitor, a gate insulator of a transistor, a non-volatile memory, a pyroelectric infrared detecting element, a piezoelectric element, an electro-optic element, an actuator, a resonator, an ultrasonic motor, an electric switch, an optical switch, or an LC noise filter element.

In the composition according to the first aspect, the dielectric thin film-forming composition for forming a dielectric thin film, which is formed of a barium strontium titanate (BST)-based complex perovskite film, is doped with aluminum (Al), and a doping amount of the aluminum (Al) is in a range of 0.1 at% to 15 at% with respect to 100 at% of perovskite A site atoms contained in the composition. As a result, for example, in a thin film capacitor including a dielectric thin film which is formed using the composition, a low leakage current density can be exhibited.

### DETAILED DESCRIPTION OF THE INVENTION

Next, embodiments of the present invention will be described. A dielectric thin film-forming composition according to the present invention is a composition for forming a dielectric thin film which is formed of a barium strontium titanate (hereinafter, referred to as "BST")-based complex perovskite film. This composition is formed of an organic metal compound solution obtained by dissolving a Ba compound, a Sr compound, and a Ti compound in an organic solvent at a predetermined ratio. In addition, this composition is doped with aluminum (Al). In addition, a doping amount of the aluminum (Al) is in a range of 0.1 at% to 15 at% and preferably 0.2 at% to 10 at% with respect to 100 at% of perovskite A site atoms contained in the composition. The reason for limiting the doping amount of the aluminum (Al) to be in the range of 0.1 at% to 15 at% with respect to 100 at% of perovskite A site atoms contained in the composition is as follows. When the doping amount is less than 0.1 at%, an aluminum (Al) doping effect is not exhibited, and there is a problem in that a leakage current density is not reduced. When the doping amount is greater than 15 at%, leakage current characteristics deteriorate. The doped aluminum (Al) is positioned in only the B site of perovskite (ABO₃) contained in the composition.

The Al content in the composition is in a range of 0.1 at% to 15 at% with respect to the total number of Ba atoms and Sr atoms.

In addition, the BST-based perovskite film is represented by a formula Ba₁₋ₓSrₓTi_{y}O₃ (where 0.2<x<0.6 and 0.9<y<1.1). In this case, the reason for adjusting raw material ratios such that an x value in the above formula satisfies the formula is as follows. When the x value is less than or equal to 0.2, dielectric loss increases. On the other hand, when the x value is greater than or equal to 0.6, tunability deteriorates. In addition, the reason for adjusting raw material ratios such that a y value in the above formula is in the above-described range is as follows. When the y value is less than or equal to 0.9 or is greater than or equal to 1.1, tunability deteriorates. "Tunability" described herein refers to the variability or change rate of capacitance.

The atomic number ratio between Ba atoms and Sr atoms is 4:1 to 2:3 in the composition.

By doping the composition with aluminum (Al), a thin film capacitor or the like having superior leakage current characteristics can be manufactured. The technical ground on which a leakage current density can be decreased by this aluminum (Al) doping is presumed to be that the film is densified by aluminum (Al) doping.
"Leakage resistance" described herein refers to the property to hold a leakage current density to be low when a high voltage is applied to a capacitor. In addition, "leakage current characteristics" refers to changes of a leakage current density when a voltage applied to a capacitor is changed, and "leakage current characteristics being superior" refers to a leakage current density being increased along with the application of a high voltage although the degree of the increase is small. It should be noted that "leakage current density" is defined by a leakage current (A/cm²) per capacitor unit area.

It is preferable that raw materials for forming the BST-based complex perovskite film contain a compound in which an organic group binds to each metal element of Ba, Sr, and Ti through an oxygen or nitrogen atom of the organic group. Examples of the compound include one or two or more elements selected from the group consisting of metal alkoxides, metal diol complexes, metal triol complexes, metal carboxylates, metal β-diketonate complexes, metal β-diketoester complexes, metal β-iminoketo complexes, and metal amino complexes. Particularly preferable compounds are metal alkoxides, and partial hydrolysates and organic acid salts thereof.

Specifically, examples of Ba compounds include carboxylates such as barium 2-ethylbutyrate, barium 2-ethylhexanoate, or barium acetate; and metal alkoxides such as barium diisopropoxide or barium dibutoxide. Examples of Sr compounds include carboxylates such as strontium 2-ethylbutyrate, strontium 2-ethylhexanoate, or strontium acetate; and metal alkoxides such as strontium diisopropoxide or strontium dibutoxide. Examples of Ti compounds include metal alkoxides such as titanium tetraethoxide, titanium tetraisopropoxide, titanium tetrabutoxide, or titanium dimethoxydiisopropoxide. Metal alkoxides may be used without any change, but partial hydrolysates thereof may be used in order to promote decomposition.

In addition, it is preferable that the raw materials for forming the BST-based complex perovskite film contain a compound in which an organic group binds to aluminum (Al) through an oxygen or nitrogen atom of the organic group. For example, examples of the compound include one or two or more elements selected from the group consisting of carboxylate compounds, nitrate compounds, alkoxide compounds, diol compounds, triol compounds, β-diketonate compounds, β-diketoester compounds, β-iminoketo compounds, and amino compounds. Particularly preferable compounds are carboxylate compounds such as aluminum 2-ethylbutyrate, aluminum 2-ethylhexanoate, or aluminum acetate; nitrate compounds such as aluminum nitrate; metal alkoxides such as aluminum triethoxide, aluminum tri-n-propoxide, aluminum triisopropoxide, aluminum tri-n-butoxide, aluminum tri-sec-butoxide, or aluminum tri-t-butoxide; and β-diketonate compounds such as aluminum acetylacetonate.

In order to prepare the dielectric thin film-forming composition according to the present invention, these raw materials are dissolved at an appropriate solvent at a ratio corresponding to a desired dielectric thin film composition to control a concentration thereof suitable for coating. Specifically, each raw material ratio in the composition is adjusted such that a metal atomic ratio in the formed dielectric thin film satisfies the above-described ratio.

The solvent of the dielectric thin film-forming composition which is used herein is appropriately determined according to the raw materials to be used. Typically, carboxylic acids, alcohols, esters, ketones (such as acetone or methyl ethyl ketone), ethers (such as dimethylether or diethylether), cycloalkanes (such as cyclohexane or cyclohexanol), aromatic compounds (such as benzene, toluene, or xylene) or tetrahydrofuran; or mixed solvents of two or more of the above-described solvents can be used.

Specifically, preferable examples of carboxylic acids include n-butyric acid, α-methylbutyric acid, i-valeric acid, 2-ethylbutyric acid, 2,2-dimethylbutyric acid, 3,3-dimethylbutyric acid, 2,3-dimethylbutyric acid, 3-methylpentanoic acid, 4-methylpentanoic acid, 2-ethylpentanoic acid, 3-ethylpentanoic acid, 2,2-dimethylpentanoic acid, 3,3-dimethylpentanoic acid, 2,3-dimethylpentanoic acid, 2-ethylhexanoic acid, and 3-ethylhexanoic acid.

In addition, preferable examples of esters include ethyl acetate, propyl acetate, n-butyl acetate, sec-butyl acetate, tert-butyl acetate, isobutyl acetate, n-amyl acetate, sec-amyl acetate, tert-amyl acetate and, isoamyl acetate. Preferable examples of alcohols include 1-propanol, 2-propanol, 1-butanol, 2-butanol, isobutyl alcohol, 1-pentanol, 2-pentanol. 2-methyl-2-pentanol, and 2-methoxyethanol.

The total concentration of organic metal compounds in the organic metal compound solution of the dielectric thin film-forming composition is preferably about 0.1 mass% to 20 mass% in terms of metal oxides. When the total concentration is lower than the lower limit, the thickness of a film formed per coating process is thin, and thus it is difficult to form a dielectric thin film having a desired thickness. On the other hand, when the total concentration is higher than the upper limit, cracking may occur on the dielectric thin film after baking, which is not preferable.

A stabilizer may be optionally added to the organic metal compound solution at a ratio (number of molecules of stabilizer)/(number of metal atoms) of about 0.2 to 3. Examples of the stabilizer include β-diketones (such as acetyl acetone, heptafluorobutanoyl pivaloyl methane, dipivaloyl methane, trifluoroacetyl acetone, or benzoyl acetone), β-ketonic acids (such as acetoacetic acid, propionyl acetic acid, or benzoyl acetic acid), β-keto esters (such as methyl, propyl, butyl, and other lower alkyl esters of the above-described ketonic acids), oxy acids (such as lactic acid, glycolic acid, α-oxybutyric acid, or salicylic acid), lower alkyl esters of the above-described oxy acids, oxyketones (such as diacetone alcohol or acetoin), diols, triols, higher carboxylic acids, alkanol amines (such as diethanolamine, triethanolamine, or monoethanolamine), and polyvalent amines.

In the present invention, it is preferable that particles be removed from the organic metal compound solution prepared as above by filtration or the like such that the number of particles having a particle size of 0.5 µm or greater (preferably 0.3 µm or greater and more preferably 0.2 µm or greater) be less than or equal to 50 particles/mL per 1 mL of the solution.

In order to measure the number of particles in the organic metal compound solution, a light scattering particle counter is used.

When the number of particles having a particle size of 0.5 µm or greater in the organic metal compound solution is more than 50 particles/mL, long-term storage stability deteriorates. The less number of particles having a particle size of 0.5 µm or greater in the organic metal compound solution, the better. In particular, the number of particles is preferably less than or equal to 30 particles/mL.

A method of treating the prepared organic metal compound solution to obtain the above-described number of particles is not particularly limited. For example, the following method may be used. A first method is a filtration method of supplying pressure with a syringe using a commercially available membrane filter having a pore size of 0.2 µm. A second method is a pressure filtration method in which a commercially available membrane filter having a pore size of 0.05 µm is combined with a pressure tank. A third method is a circulation filtration method in which the filter used in the second method is combined with a solution circulating tank.

In all the methods, a particle capture rate by the filter varies depending on a solution supply pressure. It is generally known that, the lower the pressure, the higher the capture rate. Particularly in the first method and the second method, in order to realize the condition that the number of particles having a particle size of 0.5 µm or greater is less than or equal to 50 particles/mL, it is preferable that the solution is made to pass extremely slowly through the filter at a low pressure.

By using the dielectric thin film-forming composition according to the present invention formed of the organic metal compound solution, a dielectric thin film can be easily formed. In order to form a dielectric thin film using the above-described dielectric thin film-forming composition, the composition is coated on a heat-resistant substrate using a coating method such as spin coating, dip coating, or liquid source misted chemical deposition (LSMCD), followed by drying (pre-baking) and main baking.

Specific examples of the heat-resistant substrate used herein include substrates in which single-crystalline Si, polycrystalline Si, Pt, Pt (uppermost layer)/Ti, Pt (uppermost layer)/Ta, Ru, RuO₂, Ru (uppermost layer)/RuO₂, RuO₂ (uppermost layer)/Ru, Ir, IrO₂, Ir (uppermost layer)/IrO₂, Pt (uppermost layer)/Ir, Pt (uppermost layer)/IrO₂, or a perovskite type conductive oxide such as SrRuO₃ or (LaₓSr₍₁₋ₓ₎)CoO₃ is used for a substrate surface portion. However, the heat-resistant substrate is not limited to these examples.

When a film having a desired thickness is not obtained by performing the coating process once, the coating and drying processes are repeated multiple times, followed by main baking. The desired thickness described herein refers to the thickness of the obtained dielectric thin film after main baking. For example, in the case of a thin film capacitor having a high capacitance density, the thickness of the dielectric thin film after main baking is in a range of 50 nm to 500 nm.

In addition, pre-baking is performed in the air, in an oxygen atmosphere or in a water vapor-containing atmosphere in order to remove a solvent and to thermally decompose or hydrolyze an organic metal compound or an organic compound to be transformed into a complex oxide. Even during heating in the air, moisture required for hydrolysis is sufficiently secured with moisture in the air. This heating may be performed in two stages: a low-temperature heating stage for removing a solvent and a high-temperature heating stage for hydrolyzing an organic metal compound or an organic compound.

Main baking is the process for baking the thin film obtained in pre-baking at a crystallization temperature or higher to be crystallized. As a result, a dielectric thin film is obtained. As a baking atmosphere in this crystallization process, O₂, N₂, Ar, N₂O, H₂, or a mixed gas thereof is preferable.

Pre-baking is performed at 150°C to 550°C for 1 minute to 30 minutes, and main-baking is performed at 450°C to 800°C for 1 minute to 60 minutes. Main-baking may be performed by rapid thermal annealing (RTA). When main-baking is performed by RTA, a temperature increase rate is preferably 10°C/sec to 100°C/sec.

In a thin film capacitor or the like including the dielectric thin film according to the present invention formed as above, a leakage current density can be reduced. Specifically, when a thin film capacitor including a dielectric thin film having a thickness in a range of 100 nm to 500 nm as a dielectric layer is formed and an applied voltage of this thin film capacitor is 20 V, a leakage current density can be reduced to be lower than or equal to 3.0×10⁻⁶ A/cm². In addition, the dielectric thin film according to the present invention also has superior basic characteristics as an IPD.

Accordingly, the dielectric thin film according to the present invention can be used as a constituent material of a complex electronic component such as a thin film capacitor, a capacitor, an IPD, a DRAM memory capacitor, a laminated capacitor, a gate insulator of a transistor, a non-volatile memory, a pyroelectric infrared detecting element, a piezoelectric element, an electro-optic element, an actuator, a resonator, an ultrasonic motor, an electric switch, an optical switch, or an LC noise filter element. In particular, the dielectric thin film according to the present invention can be used for one supporting a frequency band of 100 MHz or higher among the above-described complex electronic components.

### Examples

Next, examples of the present invention and comparative examples will be described in detail.

In the following examples and comparative examples, the following raw materials were used.
Ba compound: Barium 2-ethylbutyrate
Sr compound: Strontium 2-ethylbutyrate
Ti compound: Titanium tetraisopropoxide
Al compound: Aluminum 2-ethylbutyrate, aluminum 2-ethylhexanoate, aluminum acetate, aluminum nitrate, aluminum triethoxide, aluminum tri-n-propoxide, aluminum triisopropoxide, aluminum tri-n-butoxide, aluminum tri-sec-butoxide, aluminum tri-t-butoxide, aluminum acetylacetonate

### <Example 1>

As an organic solvent, sufficiently dehydrated isoamyl acetate was used, and barium 2-ethylbutyrate and strontium 2-ethylbutyrate as the Ba compound and the Sr compound were dissolved in the organic solvent at a molar ratio Ba:Sr of 70:30. Next, titanium tetraisopropoxide as the Ti compound was added to the obtained solution at a molar ratio Ba:Sr:Ti of 70:30:100 to prepare a composition formed of an organic metal compound solution. Further, aluminum tri-sec-butoxide as the Al compound was added to the composition and dissolved therein such that a doping amount of aluminum (Al) was 0.1 at% with respect to 100 at% of perovskite A site atoms contained in the composition. In addition, a stabilizer (acetyl acetone) for stabilizing the solution was added in a molar amount equivalent to 1 time the total amount of metals to prepare a thin film-forming composition having a concentration of 7 mass% in terms of metal oxides, followed by filtration using a membrane filter and a pressure tank.

In order to form a thin film, the following chemical solution deposition (CSD) method was used. That is, first, a silicon substrate as a substrate having a diameter of 6 inches on which a Pt lower electrode film was formed by sputtering was prepared. The above-prepared thin film-forming composition was coated on the Pt lower electrode film of the substrate with a spin-coating method under a condition of 500 rpm and 3 seconds and a condition of 2000 rpm and 15 seconds.

Next, using a hot plate, the composition was heated at 350°C for 10 minutes for drying and pre-baking. This coating and pre-baking process was repeated 4 times, followed by baking at a temperature increase rate of 5°C/min at 700°C in the air for 1 hour. As a result, a dielectric thin film having a thickness of 350 nm was obtained. Next, using a metal mask, a Pt upper electrode having a size of about 250 µm×250 µm was formed by sputtering on the surface of the film. As a result, a thin film capacitor was obtained.

### <Example 2>

A thin film-forming composition was prepared with the same method as that of Example 1, except that, as shown in Table 1 below, aluminum tri-sec-butoxide was added to the composition such that a doping amount of aluminum (Al) was 0.2 at% with respect to 100 at% of perovskite A site atoms contained in the composition. Using this thin film-forming composition, a thin film capacitor was obtained.

### <Example 3>

A thin film-forming composition was prepared with the same method as that of Example 1, except that, as shown in Table 1 below, aluminum tri-sec-butoxide was added to the composition such that a doping amount of aluminum (Al) was 5 at% with respect to 100 at% of perovskite A site atoms contained in the composition. Using this thin film-forming composition, a thin film capacitor was obtained.

### <Example 4>

A thin film-forming composition was prepared with the same method as that of Example 1, except that, as shown in Table 1 below, aluminum tri-sec-butoxide was added to the composition such that a doping amount of aluminum (Al) was 10 at% with respect to 100 at% of perovskite A site atoms contained in the composition. Using this thin film-forming composition, a thin film capacitor was obtained.

### <Example 5>

A thin film-forming composition was prepared with the same method as that of Example 1, except that, as shown in Table 1 below, aluminum tri-sec-butoxide was added to the composition such that a doping amount of aluminum (Al) was 15 at% with respect to 100 at% of perovskite A site atoms contained in the composition. Using this thin film-forming composition, a thin film capacitor was obtained.

### <Example 6>

A thin film-forming composition was prepared with the same method as that of Example 2, except that, as shown in Table 1 below, diethanolamine was added instead of acetyl acetone as the stabilizer. Using this thin film-forming composition, a thin film capacitor was obtained.

### <Example 7>

A thin film-forming composition was prepared with the same method as that of Example 2, except that, as shown in Table 1 below, triethanolamine was added instead of acetyl acetone as the stabilizer. Using this thin film-forming composition, a thin film capacitor was obtained.

### <Example 8>

A thin film-forming composition was prepared with the same method as that of Example 2, except that, as shown in Table 1 below, formamide was added instead of acetyl acetone as the stabilizer. Using this thin film-forming composition, a thin film capacitor was obtained.

### <Example 9>

A thin film-forming composition was prepared with the same method as that of Example 2, except that, as shown in Table 1 below, 1-amino-2-propanol was added instead of acetyl acetone as the stabilizer. Using this thin film-forming composition, a thin film capacitor was obtained.

### <Example 10>

A thin film-forming composition was prepared with the same method as that of Example 2, except that, as shown in Table 1 below, propylene glycol was added instead of acetyl acetone as the stabilizer. Using this thin film-forming composition, a thin film capacitor was obtained.

### <Example 11>

A thin film-forming composition was prepared with the same method as that of Example 4, except that, as shown in Table 1 below, 1-amino-2-propanol was added instead of acetyl acetone as the stabilizer. Using this thin film-forming composition, a thin film capacitor was obtained.

### <Example 12>

A thin film-forming composition was prepared with the same method as that of Example 4, except that, as shown in Table 1 below, aluminum 2-ethylbutyrate was added instead of aluminum tri-sec-butoxide as the Al compound. Using this thin film-forming composition, a thin film capacitor was obtained.

### <Example 13>

A thin film-forming composition was prepared with the same method as that of Example 12, except that, as shown in Table 1 below, formamide was added instead of acetyl acetone as the stabilizer; and baking was performed in a dry air atmosphere. Using this thin film-forming composition, a thin film capacitor was obtained.

### <Example 14>

A thin film-forming composition was prepared with the same method as that of Example 13, except that, as shown in Table 1 below, aluminum nitrate was added instead of aluminum 2-ethylbutyrate as the Al compound; and baking was performed in an oxygen atmosphere. Using this thin film-forming composition, a thin film capacitor was obtained.

### <Example 15>

A thin film-forming composition was prepared with the same method as that of Example 2, except that, as shown in Table 1 below, aluminum acetylacetonate was added instead of aluminum tri-sec-butoxide as the Al compound; and aluminum acetylacetonate was added to the composition such that a doping amount of aluminum (Al) was 0.2 at% with respect to 100 at% of perovskite A site atoms contained in the composition. Using this thin film-forming composition, a thin film capacitor was obtained.

### <Example 16>

A thin film-forming composition was prepared with the same method as that of Example 15, except that, as shown in Table 1 below, aluminum 2-ethylhexanoate was added instead of aluminum acetylacetonate as the Al compound. Using this thin film-forming composition, a thin film capacitor was obtained.

### <Example 17>

A thin film-forming composition was prepared with the same method as that of Example 15, except that, as shown in Table 1 below, aluminum triisopropoxide was added instead of aluminum acetylacetonate as the Al compound. Using this thin film-forming composition, a thin film capacitor was obtained.

### <Example 18>

A thin film-forming composition was prepared with the same method as that of Example 15, except that, as shown in Table 1 below, aluminum tri-n-butoxide was added instead of aluminum acetylacetonate as the Al compound. Using this thin film-forming composition, a thin film capacitor was obtained.

### <Example 19>

A thin film-forming composition was prepared with the same method as that of Example 15, except that, as shown in Table 1 below, aluminum tri-t-butoxide was added instead of aluminum acetylacetonate as the Al compound. Using this thin film-forming composition, a thin film capacitor was obtained.

### <Example 20>

A thin film-forming composition was prepared with the same method as that of Example 15, except that, as shown in Table 1 below, aluminum tri-n-propoxide was added instead of aluminum acetylacetonate as the Al compound. Using this thin film-forming composition, a thin film capacitor was obtained.

### <Example 21>

A thin film-forming composition was prepared with the same method as that of Example 15, except that, as shown in Table 1 below, aluminum triethoxide was added instead of aluminum acetylacetonate as the Al compound. Using this thin film-forming composition, a thin film capacitor was obtained.

### <Example 22>

A thin film-forming composition was prepared with the same method as that of Example 15, except that, as shown in Table 1 below, aluminum acetate was added instead of aluminum acetylacetonate as the Al compound. Using this thin film-forming composition, a thin film capacitor was obtained.

### <Comparative Example 1>

A thin film-forming composition was prepared with the same method as that of Example 1, except that the Al compound was not added. Using this thin film-forming composition, a thin film capacitor was obtained.

### <Comparative Example 2>

A thin film-forming composition was prepared with the same method as that of Example 1, except that, as shown in Table 1 below, aluminum tri-sec-butoxide was added to the composition such that a doping amount of aluminum (Al) was 0.05 at% with respect to 100 at% of perovskite A site atoms contained in the composition. Using this thin film-forming composition, a thin film capacitor was obtained.

### <Comparative Example 3>

A thin film-forming composition was prepared with the same method as that of Example 1, except that, as shown in Table 1 below, aluminum tri-sec-butoxide was added to the composition such that a doping amount of aluminum (Al) was 16 at% with respect to 100 at% of perovskite A site atoms contained in the composition. Using this thin film-forming composition, a thin film capacitor was obtained.

**Table 1**

| | Dielectric thin film-forming composition | | | Evaluation |
|---|---|---|---|---|
| | Doping amount of Al (at%) | Addition form of Al | Stabilizer | Leakage current density (A/cm²) |
| Example 1 | 0.1 | Aluminum tri-sec-butoxide | Acetyl acetone | 3.1×10⁻⁶ |
| Example 2 | 0.2 | Aluminum tri-sec-butoxide | Acetyl acetone | 2.4×10⁻⁶ |
| Example 3 | 5 | Aluminum tri-sec-butoxide | Acetyl acetone | 9.8×10⁻⁷ |
| Example 4 | 10 | Aluminum tri-sec-butoxide | Acetyl acetone | 1.5×10⁻⁶ |
| Example 5 | 15 | Aluminum tri-sec-butoxide | Acetyl acetone | 5.9×10⁻⁶ |
| Example 6 | 0.2 | Aluminum tri-sec-butoxide | Diethanolamine | 2.5×10⁻⁶ |
| Example 7 | 0.2 | Aluminum tri-sec-butoxide | Triethanolamine | 2.4×10⁻⁶ |
| Example 8 | 0.2 | Aluminum tri-sec-butoxide | Formamide | 2.5×10⁻⁶ |
| Example 9 | 0.2 | Aluminum tri-sec-butoxide | 1-Amino-2-propanol | 2.3×10⁻⁶ |
| Example 10 | 0.2 | Aluminum tri-sec-butoxide | Propylene glycol | 2.4×10⁻⁶ |
| Example 11 | 10 | Aluminum tri-sec-butoxide | 1-Amino-2-propanol | 1.4×10⁻⁶ |
| Example 12 | 10 | Aluminum 2-ethylbutyrate | Acetyl acetone | 1.3×10⁻⁶ |
| Example 13 | 10 | Aluminum 2-ethylbutyrate | Formamide | 1.3×10⁻⁶ |
| Example 14 | 10 | Aluminum nitrate | Formamide | 1.5×10⁻⁶ |
| Example 15 | 0.2 | Aluminum acetylacetonate | Acetyl acetone | 2.6x10⁻⁶ |
| Example 16 | 0.2 | Aluminum 2-ethylhexanoate | Acetyl acetone | 2.5×10⁻⁶ |
| Example 17 | 0.2 | Aluminum triisopropoxide | Acetyl acetone | 2.5×10⁻⁶ |
| Example 18 | 0.2 | Aluminum tri-n-butoxide | Acetyl acetone | 2.3×10⁻⁶ |
| Example 19 | 0.2 | Aluminum tri-t-butoxide | Acetyl acetone | 2.4×10⁻⁶ |
| Example 20 | 0.2 | Aluminum tri-n-propoxide | Acetyl acetone | 2.4×10⁻⁶ |
| Example 21 | 0.2 | Aluminum triethoxide | Acetyl acetone | 2.5×10⁻⁶ |
| Example 22 | 0.2 | Aluminum acetate | Acetyl acetone | 2.4×10⁻⁶ |
| Comparative Example 1 | 0 | - | Acetyl acetone | 8.9×10⁻⁶ |
| Comparative Example 2 | 0.05 | Aluminum tri-sec-butoxide | Acetyl acetone | 8.8×10⁻⁶ |
| Comparative Example 3 | 16 | Aluminum tri-sec-butoxide | Acetyl acetone | 6.8×10⁻⁶ |

### <Comparative Test 1 and Evaluation>

Regarding each of the thin film capacitors obtained in Examples 1 to 22 and Comparative Examples 1 to 3, a leakage current density was evaluated. This leakage current density was measured as follows. A DC voltage was applied between the upper electrode of the thin film capacitor and the Pt lower electrode positioned immediately below the dielectric thin film to evaluate the voltage dependence (I-V characteristic) of the leakage current density. A leakage current density value at an applied voltage of 20 V was used as a representative value. The I-V characteristic was measured using a current and voltage measuring device (mode name: 236 SMU, manufactured by Keithley Instruments) under conditions of Bias step: 0.5 V, Delay time: 0.1 sec, Temperature: 23°C, and Hygrometry: 50±10%. The results are shown in Table 1.

As clearly seen from Table 1, in Comparative Examples 1 to 3, the leakage current density values were high at 6.8×10⁻⁶ A/cm² to 8.9×10⁻⁶ A/cm²; whereas, in Examples 1 to 22, the leakage current density values were low at 9.8×10⁻⁷ A/cm² to 5.9×10⁻⁶ A/cm², and the sufficiently superior results were obtained in the evaluation of the leakage current density.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

## Claims

1. A dielectric thin film-forming composition for forming a dielectric thin film,
wherein the dielectric thin film is formed of a barium strontium titanate (BST)-based complex perovskite film,
the composition is doped with aluminum (Al), and
a doping amount of the aluminum (Al) is in a range of 0.1 at% to 15 at% with respect to 100 at% of perovskite A site atoms contained in the composition.

2. The dielectric thin film-forming composition according to claim 1,
wherein the barium strontium titanate (BST)-based complex perovskite film is represented by a formula Ba₁₋ₓSrₓTi_{y}O₃ (where 0.2<x<0.6 and 0.9<y<1.1).

3. The dielectric thin film-forming composition according to claim 1,
wherein raw materials for forming the barium strontium titanate (BST)-based complex perovskite film contain a compound in which an organic group binds to a metal element through an oxygen or nitrogen atom of the organic group.

4. The dielectric thin film-forming composition according to claim 3,
wherein the raw materials for forming the barium strontium titanate (BST)-based complex perovskite film contain one or two or more elements selected from the group consisting of metal alkoxides, metal diol complexes, metal triol complexes, metal carboxylates, metal β-diketonate complexes, metal β-diketoester complexes, metal β-iminoketo complexes, and metal amino complexes.

5. The dielectric thin film-forming composition according to claim 1,
wherein the raw materials for forming the barium strontium titanate (BST)-based complex perovskite film contain a compound in which an organic group binds to aluminum (Al) through an oxygen or nitrogen atom of the organic group.

6. The dielectric thin film-forming composition according to claim 5,
wherein the raw materials for forming the barium strontium titanate (BST)-based complex perovskite film contain one or two or more elements selected from the group consisting of carboxylate compounds, nitrate compounds, alkoxide compounds, diol compounds, triol compounds, β-diketonate compounds, β-diketoester compounds, β-iminoketo compounds, and amino compounds.

7. The dielectric thin film-forming composition according to any one of claims 1 to 6, further comprising
0.2 mol to 3 mol of one or two or more stabilizers selected from the group consisting of β-diketones, β-ketonic acids, β-keto esters, oxyacids, diols, triols, higher carboxylic acids, alkanolamines, and polyvalent amines with respect to 1 mol of a total amount of metals in the composition.

8. The dielectric thin film-forming composition according to claim 1,
wherein the doping amount of the aluminum (Al) is 0.2 at% to 10 at% with respect to 100 at% of perovskite A site atoms contained in the composition.

9. A method of forming a dielectric thin film,
wherein the dielectric thin film-forming composition according to any one of claims 1 to 8 is used.

10. A method of forming a dielectric thin film, comprising:
repeating coating the dielectric thin film-forming composition according to any one of claims 1 to 8 on a heat-resistant substrate and drying the composition until a film having a desired thickness is obtained; and
baking the film at a crystallization temperature or higher in the air, in an oxidation atmosphere, or in a water vapor-containing atmosphere.

11. A method of manufacturing a complex electronic component,
wherein the complex electronic component includes a dielectric thin film which is formed using the method according to claim 9 or 10, and
the complex electronic component is a thin film capacitor, a capacitor, an IPD, a DRAM memory capacitor, a laminated capacitor, a gate insulator of a transistor, a non-volatile memory, a pyroelectric infrared detecting element, a piezoelectric element, an electro-optic element, an actuator, a resonator, an ultrasonic motor, an electric switch, an optical switch, or an LC noise filter element.
